# EUROPÄISCHE PATENTSCHRIFT

(11) **EP 0 730 542 B1**
(45) Veröffentlichungstag und Bekanntmachung des Hinweises auf die Patenterteilung: **18.03.1998**
(21) Anmeldenummer: 95903778.9
(22) Anmeldetag: 29.11.1994
(51) Int. Cl.: B62D 11/10

(54) **ABSICHERUNG FÜR EIN LENKGETRIEBE EINES KETTENFAHRZEUGS**
PROTECTION DEVICE FOR A STEERING TRANSMISSION OF A TRACKED VEHICLE
SYSTEME DE SECURITE POUR LA BOITE DE DIRECTION D'UN VEHICULE CHENILLE

(30) Priorität: 03.12.1993 DE 4341202
(43) Veröffentlichungstag der Anmeldung: 11.09.1996
(73) Patentinhaber: ZF FRIEDRICHSHAFEN Aktiengesellschaft, 88038 Friedrichshafen (DE)
(72) Erfinder: SORG, Johannes, D-88213 Ravensburg (DE); LOICHINGER, Walter, D-88045 Friedrichshafen (DE)
(86) Internationale Anmeldenummer: EP9403952
(87) Internationale Veröffentlichungsnummer: WO9515272

(56) Entgegenhaltungen:
- DE-A- 1 755 708
- DE-A- 3 619 055
- DE-A- 3 840 686

## Beschreibung

Die Erfindung bezieht sich auf ein Überlagerungslenkgetriebe für ein Kettenfahrzeug mit Planetenradsätzen, Brems- und Kupplungsmitteln zum Schalten unterschiedlicher Übersetzungen zur Kurvenfahrt mit abweichenden Kurvenradien.

Für das Lenken von Kettenfahrzeugen haben sich wegen der Fahrsicherheit bei hohen Geschwindigkeiten auf der Straße und wegen der geringen Lenkverluste bei Geländefahrt die Überlagerungslenkgetriebe weitgehend durchgesetzt. Aus der DE-A 36 19 055 ist ein Überlagerungslenkgetriebe mit drei Radienbereichen bekanntgeworden. Dieses Überlagerungslenkgetriebe setzt sich aus einem hydrostatischen und einem mechanischen Teilgetriebe zusammen. Eine Null-Welle des Lenkgetriebes wirkt mit Summierungsgetrieben des Grundgetriebes zusammen. In einem ersten Radienbereich ist ausschließlich das hydrostatische Teilgetriebe, in einem zweiten Radienbereich zusätzlich das mechanische Teilgetriebe und in einem dritten, festen Radius ist ausschließlich das mechanische Teilgetriebe wirksam.

Lenk-Schalt-Getriebe für Kettenfahrzeuge haben den prinzipiellen Nachteil, daß sie durch Fehlbedienung oder durch abnormale Fahrwiderstände unter bestimmten Fahrbedingungen überlastet werden können.

Zum Fahren großer Kurvenradien ist ein kleiner Drehzahlunterschied zwischen der kurvenäußeren und der kurveninneren Kette zwingend erforderlich. Die dazu notwendige kleine Getriebeabtriebsdrehzahl des Lenkgetriebes wird durch eine große Übersetzung zwischen dem Eintrieb (Motordrehzahl) und dem Abtrieb des Lenkgetriebes erreicht. Diese große Übersetzung bringt aber nicht nur die gewünschte kleine Abtriebsdrehzahl, sondern erzeugt auch einen sehr hohen Drehmomentüberschuß an den Abtriebswellen des Grundgetriebes. In den vorstehend geschilderten Zusammenhängen liegt die Ursache für die prinzipielle Überlastungsgefahr dieser Lenk-Schalt-Getriebe, denn das überschüssige Drehmomentangebot wird bei normalem Fahrzeugeinsatz nie vom Fahrzeug abgefordert. Unter bestimmten Bedingungen können aber diese Abtriebsmomente, beispielsweise bei Fehlbedienungen (z. B. Wenden um die Hochachse mit eingelegter Feststellbremse) oder abnormalen Fahrwiderständen (z. B. durch Fremdkörper blockiertes Laufwerk) abgestützt werden.

Da aus wirtschaftlichen Gründen kein Getriebe für diese eventuell auftretenden Drehmomente ausgelegt werden kann, besteht die Gefahr, daß ein Lenk-Schalt-Getriebe aufgrund durchrutschender Kupplungen im Lenkgetriebe zerstört werden kann.

Der vorliegenden Erfindung liegt die Aufgabe zugrunde, eine Absicherung für ein Lenk-Schalt-Getriebe zu schaffen, die das mechanische Überlagerungslenkgetriebe bei Überlastungen zuverlässig absichert.

Die der Erfindung zugrunde liegende Aufgabe wird dadurch gelöst, daß die Antriebsdrehzahl, die Abtriebsdrehzahl des Lenkgetriebes und die geschalteten Übersetzungen im Lenkgetriebe erfaßt und mit vorgegebenen Betriebsparametern verglichen werden und daß bei Schlupferkennung eine Abschaltung des Lenkgetriebes erfolgt. Mit der vorgeschlagenen Lösung ist eine Absicherung des mechanischen Überlagerungslenkgetriebes im Falle von Überlast zuverlässig ohne Einfluß auf die Mobilität, die Fahrsicherheit des Fahrzeugs und seiner Besatzung möglich. Die Abschaltbedingungen sind so gewählt, daß, prinzipbedingt, eine Abschaltung des Lenkgetriebes nur bei den Fahrzuständen auftritt, bei denen theoretisch auch eine Überlastung erfolgen kann. Ferner erfolgt die Abschaltung nur beim Anfahren oder bei sehr kleinen Geschwindigkeiten.

Eine einfache Lösung zur Abschaltung des Lenkgetriebes besteht darin, daß bei Schlupferkennung die Druckversorgung zum Lenkgetriebe unterbrochen wird.

Es ist sehr vorteilhaft, die Abschaltbedingungen durch eine logische Verknüpfung verschiedener Betriebsparameter zu ermitteln. Zu diesen Betriebsparametern zählen vorzugsweise die Eingangssignale: geschalteter Gang, Fahrzeuggeschwindigkeit, geschaltete Übersetzung im Lenkgetriebe und der Vergleich der An- und Abtriebsdrehzahlen des Lenkgetriebes.

Es ist vorteilhaft, die Betriebsparameter um das Eingangssignal des Bremssignals zu erweitern. Mit der Verwertung des Bremssignals ist es möglich, bei bestimmten Fahrmanövern sofort das Lenkgetriebe abzuschalten, ohne ein Durchrutschen der Kupplungen abzuwarten. Dies kann beispielsweise beim Fahrmanöver "Wenden um die Hochachse" mit betätigter Feststellbremse der Fall sein.

In besonders einfacher Weise läßt sich die Abschaltung des Lenkgetriebes aufheben, indem die Stellung eines Fahrschalters bzw. Wendehebels und die Lenkradstellung erfaßt werden. Diese Signale werden über eine UND-Funktion miteinander verknüpft. Sobald das Lenkrad in die Geradeausstellung zurückgedreht wird, wird die Abschaltung des Lenkgetriebes aufgehoben.

Um auszuschalten, daß die einzelnen Druckschaltersignale, die die geschalteten Übersetzungen im Lenkgetriebe repräsentieren, in beliebigen Kombinationen auftreten, ist es vorteilhaft, die Signale der Druckschalter auf Plausibilität zu überprüfen.

Bei einer bevorzugten Ausgestaltung der erfindungsgemäßen Lösung besteht die Absicherung des Lenkgetriebes aus drei Funktionsblöcken. Diese werden aus einer elektronischen Getriebesteuerung, einem Funktionsblock des Lenkgetriebes und einer Rechnereinheit gebildet.

Es ist vorteilhaft, eine Abschaltung des Lenkgetriebes dem Fahrer visuell anzuzeigen. Hierzu ist eine Warnlampe vorgesehen.

Weitere, für die Erfindung wesentliche Merkmale sowie die daraus resultierenden Vorteile sind der nachfolgenden Beschreibung eines Ausführungsbeispiels der Erfindung zu entnehmen.
Es zeigen:
- Fig. 1: ein Getriebeschema eines automatischen Lenk-Schalt-Getriebes für Kettenfahrzeuge;
- Fig. 2: eine Tabelle zum Schaltgetriebe;
- Fig. 3: eine Tabelle zum Lenkgetriebe;
- Fig. 4: eine Funktionstabelle zur Darstellung der Abschaltbedingungen und
- Fig. 5: eine Tabelle zur Fehlererkennung von Druckschaltern.
- Fig. 6: eine schematische Abbildung der Funktionsgruppen der Lenkgetriebeabsicherung mit einer Funktionsübersicht;

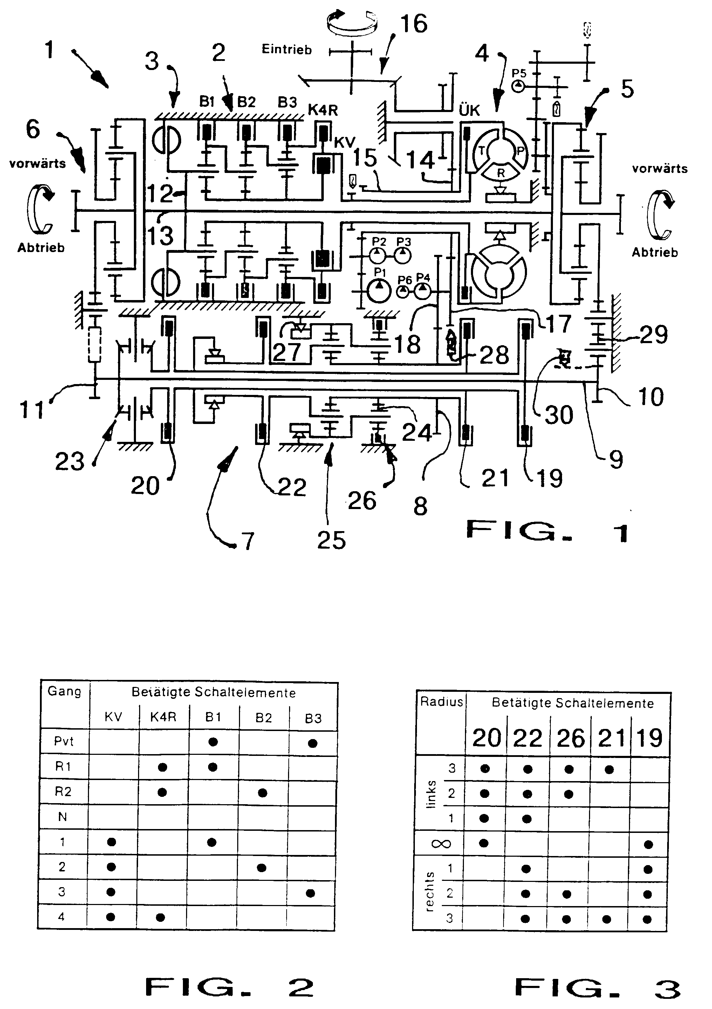

In Fig. 1 ist das Getriebeschema eines automatischen Lenk-Schalt-Getriebes 1 für ein Kettenfahrzeug dargestellt. Dieses Lenk-Schalt-Getriebe setzt sich aus folgenden Modulen zusammen:
einem Schaltgetriebe 2, einer Strömungsbremse (Retarder) 3, einem hydrodynamischen Wandler 4 und - in der Zeichnung rechts bzw. links liegenden - Summierungsgetrieben 5 und 6. Unterhalb dieser Baugruppen ist ein Lenkgetriebe 7 gezeichnet mit einem Antriebszahnrad 8 und einer Null-Welle 9, die über Zahnräder 10 und 11 mit den Summierungsgetrieben 5 und 6 verbunden ist.

Das Schaltgetriebe 2 hat eingangsseitig zwei konzentrisch zueinander angeordnete Kupplungen KV und K4R. Es folgen drei Planetenradsätze, deren Hohlräder über Bremsen B3, B2 und B1 mit einem Gehäuse verbindbar sind. Ein Steg 12 des dritten Planetenradsatzes ist mit einer Zentralwelle 13 drehfest verbunden. Über die Zentralwelle 13 erfolgt der Antrieb der Summierungsgetriebe 5 und 6. Diese Getriebe treiben die selbst nicht dargestellten Antriebsketten des Kettenfahrzeugs.

Ein Zahnrad 14, das drehfest auf einer Hohlwelle 15 des Eintriebs 16 für das Lenk-Schalt-Getriebe 1 angeordnet ist, steht mit einem Antriebszahnrad 17 des Lenkgetriebes 7 in kämmender Verbindung. Ein weiteres Zahnrad 18 stellt die Antriebsverbindung zum Zahnrad 8 her.

Das Lenkgetriebe 7 verfügt über insgesamt vier Kupplungen 19, 20, 21 und 22. Bei Geradeausfahrt sind die Kupplungen 19 und 20 geschlossen. Wird die Kupplung 19 geöffnet, macht das Kettenfahrzeug eine Rechtskurve und bei geschlossener Kupplung 19 und geöffneter Kupplung 20 durchfährt das Fahrzeug eine Linkskurve. Zwischen der Kupplung 20 und dem Zahnrad 11 liegt ein Getriebe 23 zur Drehrichtungsumkehr.

Das Lenkgetriebe 7 wird vervollständigt durch zwei Planetenradsätze 24 und 25. Das große Zentralrad des Planetenradsatzes 24 kann über eine Bremse 26 mit dem Gehäuse verbunden werden. Das Hohlrad des Planetenradsatzes 25 stützt sich über einen Freilauf 27 am Gehäuse ab.

Aus den Tabellen entsprechend Fig. 2 und Fig. 3 folgt, welche Schaltelemente in welchen Gängen bzw. bei welchen Radien betätigt sind.

Zur Absicherung des Lenkgetriebes 7 wird die Antriebsdrehzahl n_An-Lenk mit Hilfe eines Drehzahlsensors 28 erfaßt. Des weiteren wird die Abtriebsdrehzahl n_Ab-Lenk an einem Zwischenrad 29 zwischen dem Zahnrad 10 der Null-welle 9 und dem Summierungsgetriebe 5 abgegriffen. Hierzu ist ein weiterer Drehzahlsensor 30 vorgesehen.

Durch selbst nicht dargestellte Druckschalter an den Kupplungen 21 und 22 sowie der Bremse 26 entsprechend den geschalteten Übersetzungen im Lenkgetriebe 7 werden diese Getriebeelemente zwischen dem ersten (festen) Radius und dem dritten Radius auf auftretenden Schlupf hin überwacht. Bei Schlupferkennung wird ein - ebenfalls nicht dargestelltes - Magnetventil angesteuert, welches die Druckversorgung zum Lenkgetriebe 7 und damit die Drehmomentübertragung unterbricht.

Die Abschaltbedingungen sind so gewählt, daß
1. eine Abschaltung des Lenkgetriebes nur bei den Fahrzuständen auftreten kann, bei denen theoretisch auch eine Überlastung erfolgen kann und
2. eine Abschaltung des Lenkgetriebes nur beim Anfahren oder bei sehr kleinen Geschwindigkeiten erfolgen kann.

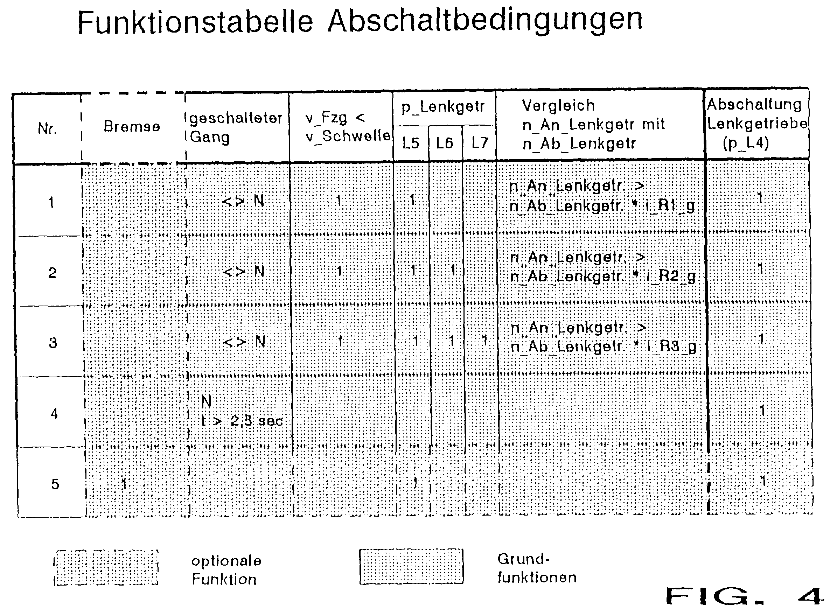

Im einzelnen sind die Abschaltbedingungen der tabellarischen Übersicht entsprechend Fig. 4 zu entnehmen.

Vorzugsweise werden folgende Eingangsparameter überwacht und miteinander nach logischen Gesetzmäßigkeiten verknüpft:
geschalteter Gang, abweichend von der Neutralstellung N (optionales Gangsignal),
Fahrzeuggeschwindigkeit: v_Fzg < als ein Fahrzeuggeschwindigkeits-Maximalwert: Fzg_Schwelle,
Radiendrücke: p_Lenkgetr. (Druckschalter an der Kupplung 22, der Bremse 24 und der Kupplung 21).

Die Radiendrücke sind mit p_Lenkgetr. L5, L6 und L7 gekennzeichnet.

Ferner findet ein Vergleich der Antriebsdrehzahlen n_An-Lenkgetr. mit den Abtriebsdrehzahlen n_Ab-Lenkgetr. statt. Die Abtriebsdrehzahlen werden mit den Übersetzungen der einzelnen Kurvenradien I_R1_g, I_R2_g und I_R3_g multipliziert.

Die Eingangssignale "geschalteter Gang N", "v_Fzg < Fzg_Schwelle", "p_Lenkgetr. L5", "p_Lenkgetr. L6" und "p_Lenkgetriebe L7" sowie der "Vergleich n_An-Lenkgetr. mit n_Ab-Lenkgetr." sind mit einer UND-Funktion verknüpft. Hieraus folgt, daß das Lenkgetriebe 7 erst dann abgeschaltet wird, wenn alle Bedingungen erfüllt sind. In der Tabelle ist ferner dargestellt, daß optional die Möglichkeit besteht, die Eingangssignale um das Bremssignal "Bremse" zu erweitern. Dieses hat den Vorteil, daß z. B. bei einem Fahrmanöver "Wenden um die Hochachse" mit betätigter Feststellbremse sofort nach der Betätigung der Lenkung das Lenkgetriebe 7 abgeschaltet wird. In diesem Fall wird nicht abgewartet, bis eine der Kupplungen bzw. die Bremse durchrutscht.

Die Abschaltung des Lenkgetriebes 7 wird aufgehoben, sobald das Lenkrad in die Geradeausstellung zurückgedreht wird. Hierzu wird die Position des Fahrschalters (Wendehebel) und die Lenkradstellung erfaßt und über eine UND-Funktion miteinander verknüpft.

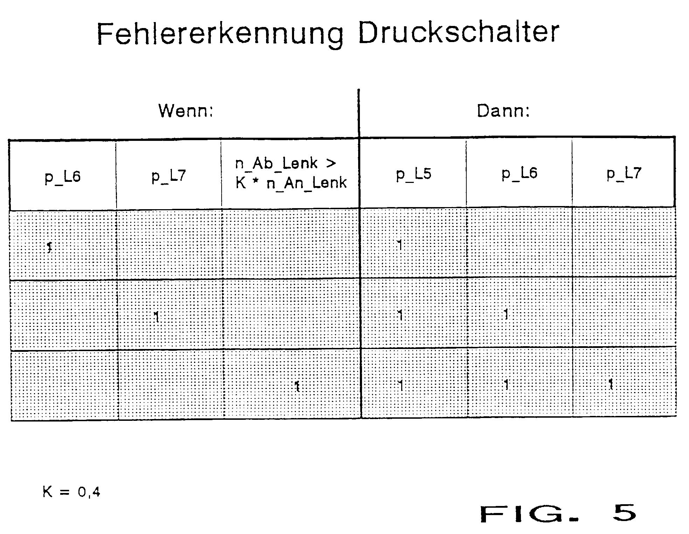

Es hat sich als sehr vorteilhaft erwiesen, die beschriebene Absicherung des Lenkgetriebes 7 durch zusätzliche Plausibilitätsprüfungen zu vervollkommnen. Ein Beispiel hierfür ist eine Fehlererkennung für die Druckschalter. Die tabellarische Übersicht entsprechend Fig. 5 sagt aus, daß die einzelnen Druckschaltersignale p_L5, p_L6 und p_L7 nicht in beliebigen Kombinationen auftreten können.

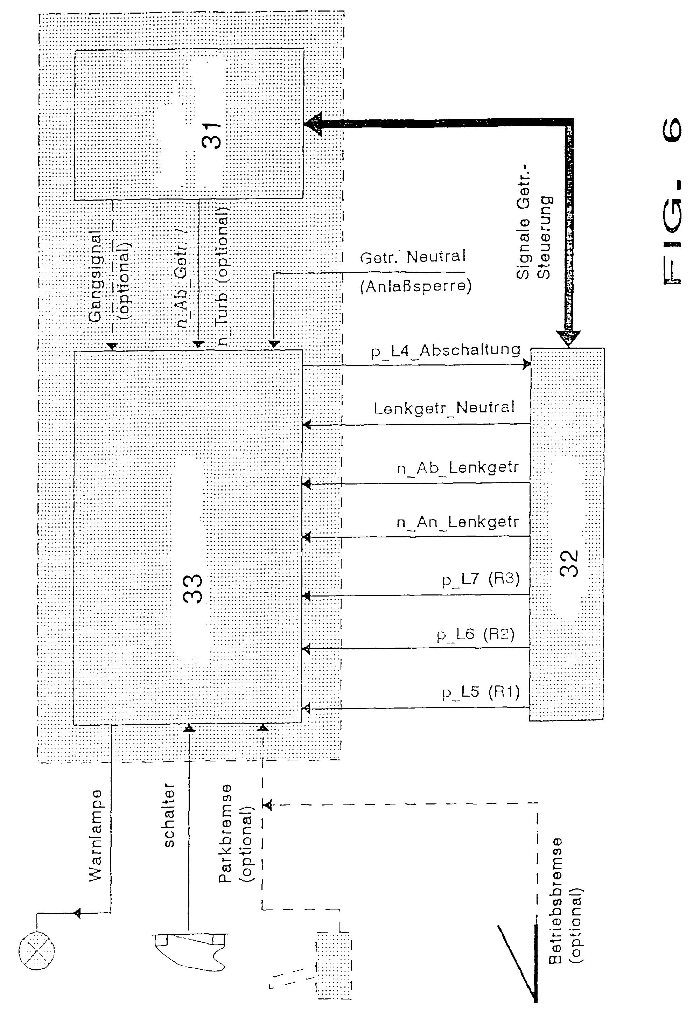

Aus der Funktionsübersicht nach Fig. 6 geht das prinzipielle Zusammenwirken der einzelnen Funktionsblöcke der elektronischen Absicherung des Lenkgetriebes hervor. Im wesentlichen wirken drei Funktionsblöcke zusammen: eine Steuerelektronik 31 für das Lenk-Schalt-Getriebe 1, ein Funktionsblock 32 des Lenkgetriebes 7, der die Radiendrücke p_L5, p_L6 und p_L7 liefert. Ferner wird die An- und Abtriebsdrehzahl sowie die Neutralstellung des Lenkgetriebes sensiert. Diese Signale werden einer Steuerelektronik 33 zugeführt. Zwischen der elektronischen Getriebesteuerung 31 und dem Funktionsblock 32 werden die Signale zur Getriebesteuerung ausgetauscht. Die elektronische Getriebesteuerung 31 liefert die Abtriebsdrehzahl n_Ab-Getriebe an die Rechnereinheit 33. Das Gangsignal kann optional Verwendung finden. Anstelle der Getriebeabtriebsdrehzahl könnte die Drehzahl einer Turbine verarbeitet werden.

An der Steuerelektronik 33 liegen optional die Signale "Bremse" (Park- und/oder Betriebsbremse) an. Der Fahrzustand "Stand-by" wird durch einen Schalter vorgegeben.

Die zentrale Steuerelektronik 33 verarbeitet die Eingangssignale nach den aufgezeigten logischen Regeln. Zur Abschaltung des Lenkgetriebes 7 liefert sie ein Abschaltsignal p_L4-Abschaltung an den Funktionsblock 32. Es wird das Magnetventil angesteuert, welches die Druckversorgung zum Lenkgetriebe und damit die Drehmomentübertragung des Lenkgetriebes unterbricht.

Die Abschaltung des Lenkgetriebes wird dem Fahrer über eine Warnlampe visuell angezeigt.

Die erfindungsgemäße Absicherung des Lenkgetriebes 7 zeichnet sich in vorteilhafter Weise durch folgende Eigenschaften aus:
- Die Schlupferkennung ist aus Sicherheitsgründen nur bei den Fahrzuständen "Stand-by" geschaltet, bei denen prinzipiell eine Überlastung erfolgen kann. (Kurvenradien < s/2; s = Spurweite des Fahrzeugs)
- Eine Abschaltung des Lenkgetriebes erfolgt entweder bei Fahrzeugstillstand oder bei sehr kleinen Fahrzeuggeschwindigkeiten.
- Die Radienerkennung < s/2 wird nur aus der Fahrzeuggeschwindigkeit abgeleitet (normalerweise wird die kurvenäußere und die kurveninnere Abtriebsdrehzahl benötigt).
- Die Reaktion auf eine Überlast ist die Abschaltung des Lenkgetriebes durch Abschaltung des Versorgungsdrukkes.
- Die Drehmomentunterbrechung des Lenkgetriebes erfolgt durch Abschaltung des Versorgungsdruckes des Lenkgetriebes.
- Das Abschaltventil ist im Filtergehäuse Lenkgetriebedruck-Versorgung integriert.
- Die Überlastung des Lenkgetriebes wird durch eine Schlupferkennung zwischen Lenkgetriebeantriebsdrehzahl und Lenkgetriebeabtriebsdrehzahl sensiert.
- Durch die Schlupferfassung des Lenkgetriebes kann die maximale Drehmomentübertragungsfähigkeit des Lenkgetriebes ohne Berücksichtigung von Sicherheitsfaktoren in Form von Drehmomenttoleranzen ausgenutzt werden. (Im Gegensatz von Drehmomentsensoren, die so abgestimmt sein müssen, daß vor Erreichen der Schlupfgrenze eine Drehmomentbegrenzung ausgelöst werden muß.)
- Die Aufhebung der Abschaltung erfolgt durch Zurückdrehen des Lenkrades in Geradeaus-Stellung.
- Durch die Möglichkeit der Abschaltung des Lenkgetriebes bei Überlast kann ohne Zusatzaufwand das Lenkgetriebe auch in Neutralstellung des Fahrschalters (Fahrgetriebe) abgeschaltet werden (Sicherheit).
- Durch Plausibilitätsüberprüfungen der Druckschaltersignale sowie der Lenkgetriebean- und -abtriebsdrehzahlen ist eine Diagnose der Druckschalter möglich.
- Die Abschaltung des Lenkgetriebes wird dem Fahrer durch eine Warnlampe angezeigt.
- Die Abschalteinrichtung kann im Störfall durch einen Überbrückungsschalter deaktiviert werden.
- Relativ einfache Nachrüstmöglichkeit der Getriebe auf die Lenkgetriebeabsicherung.
- Die Steuerungselektronik kann entweder in die bestehende elektronische Getriebesteuerung integriert oder getriebefest an das Getriebe montiert werden (im zweiten Fall kein Nachrüstaufwand für das Fahrzeug).
- Die zur Erkennung der im Lenkgetriebe geschalteten Übersetzung verwendeten Druckschalter werden gleichzeitig zur Beeinflussung des Fahrprogramms benutzt (Doppelfunktion).
- Die Absicherungseinrichtung ist im Getriebe bzw. in der Getriebesteuerung integriert, d. h. es sind keine Schnittstellen zu anderen Fahrzeugbaugruppen notwendig.

### Bezugszeichen

- 1: Lenk-Schalt-Getriebe
- 2: Schaltgetriebe
- 3: Strömungsbremse
- 4: hydrodynamischer Wandler
- 5: Summierungsgetriebe
- 6: Summierungsgetriebe
- 7: Lenkgetriebe
- 8: Antriebszahnrad
- 9: Null-Welle
- 10: Zahnrad
- 11: Zahnrad
- 12: Steg
- 13: Zentralwelle
- 14: Zahnrad
- 15: Hohlwelle
- 16: Eintrieb
- 17: Antriebszahnrad
- 18: Zahnrad
- 19: Kupplung
- 20: Kupplung
- 21: Kupplung
- 22: Kupplung
- 23: Getriebe
- 24: Planetenradsatz
- 25: Planetenradsatz
- 26: Bremse
- 27: Freilauf
- 28: Drehzahlsensor
- 29: Zwischenrad
- 30: Drehzahlsensor
- 31: Steuerelektronik
- 32: Funktionsblock
- 33: Steuerelektronik

## Patentansprüche

1. Überlagerungslenkgetriebe (7) für ein Kettenfahrzeug mit Planetenradsätzen (24, 25), Brems- und Kupplungsmitteln (19, 20, 21, 22, 23, 26) zum Schalten unterschiedlicher Übersetzungen zur Kurvenfahrt mit abweichenden Kurvenradien, dadurch **gekennzeichnet**, daß die Antriebsdrehzahl (n_An-Lenk), die Abtriebsdrehzahl (n_Ab-Lenk) des Lenkgetriebes (7) und die geschalteten Übersetzungen im Lenkgetriebe (7) erfaßt und mit vorgegebenen Betriebsparametern (Gang, abweichend von der Neutralstellung bzw. Gangsignal, Fahrzeuggeschwindigkeit bzw. Getriebeabtriebsdrehzahl) verglichen werden und daß bei Schlupferkennung eine Abschaltung des Lenkgetriebes (7) erfolgt.

2. Überlagerungslenkgetriebe nach Anspruch 1, dadurch **gekennzeichnet**, daß bei Schlupferkennung die Druckversorgung zum Lenkgetriebe (7) unterbrochen wird.

3. Überlagerungslenkgetriebe nach Anspruch 1, dadurch **gekennzeichnet**, daß die Abschaltbedingungen durch eine logische Verknüpfung (UND-Funktion) der Eingangssignale "geschalteter Gang" (abweichend von der Neutralstellung N), der "Fahrzeuggeschwindigkeit v_Fzg < als ein vorgegebener Grenzwert Fzg_Schwelle", der geschalteten Übersetzungen im Lenkgetriebe (p_Lenkgetr. L5, p_Lenkgetr. L6 und p_Lenkgetr. L7) sowie aus dem Vergleich der An- und Abtriebsdrehzahlen (n_An-Lenk, n_Ab-Lenk) des Lenkgetriebes ermittelt werden.

4. Überlagerungslenkgetriebe nach Anspruch 3, dadurch **gekennzeichnet**, daß die Eingangssignale um das Bremssignal erweitert sind.

5. Überlagerungslenkgetriebe nach den Ansprüchen 1 und 4, dadurch **gekennzeichnet**, daß zur Aufhebung der Abschaltung des Lenkgetriebes (7) die Stellung eines Fahrschalters (Wendehebel) und die Lenkradstellung über eine UND-Funktion miteinander verknüpft sind.

6. überlagerungslenkgetriebe nach den Ansprüchen 1 und 3, dadurch **gekennzeichnet**, daß die geschalteten Übersetzungen (L5, L6, L7) im Lenkgetriebe (7) durch Druckschalter an den Brems- und Kupplungsmitteln (19, 20, 21, 22, 23 und 26) erfaßt und auf Plausibilität überprüft werden, so daß die Druckschaltersignale p_L5, p_L6 und p_L7 nicht in beliebigen Kombinationen auftreten können.

7. Überlagerungslenkgetriebe nach den Ansprüchen 1 und 3, dadurch **gekennzeichnet**, daß die Absicherung des Lenkgetriebes (7) aus drei Funktionsblökken: einer elektronischen Getriebesteuerung (31), einem Funktionsblock (32) des Lenkgetriebes (7) und einer Rechnereinheit (33) besteht.

8. Überlagerungslenkgetriebe nach Anspruch 1, dadurch **gekennzeichnet**, daß eine Abschaltung des Lenkgetriebes (7) dem Fahrer visuell angezeigt wird.

## Claims

1. Cross-drive steering transmission (7) for a tracked vehicle having planet wheel sets (24, 25), brake and clutch means (19, 20, 21, 22, 23, 26) for selecting different transmission ratios for driving round bends with varying curve radii, characterized in that the input speed (n_An-Lenk), the output speed (n_Ab-Lenk) of the steering gear (7) and the selected transmission ratios in the steering gear (7) are acquired and compared with preset operating parameters (speed gear, varying from the neutral position and/or speed gear signal, vehicle speed and/or transmission output speed) and that, upon detection of slip, the steering transmission (7) is disengaged.

2. Cross-drive steering transmission according to claim 1, characterized in that, upon detection of slip, the pressure supply to the steering transmission (7) is interrupted.

3. Cross-drive steering transmission according to claim 1, characterized in that the disengage conditions are determined by a logical combination (AND operation) of the input signals "selected gear speed" (varying from the neutral position N), "vehicle speed v_Fzg < than a preset limit value Fzg_threshold", the selected transmission ratios in the steering transmission (p_Lenkgetr. L5, p_Lenkgetr. L6 and p_Lenkgetr. L7) as well as from the comparison of the input and output speeds (n_An-Lenk, n_Ab-Lenk) of the steering transmission.

4. Cross-drive steering transmission according to claim 3, characterized in that the input signals are extended by the brake signal.

5. Cross-drive steering transmission according to claims 1 and 4, characterized in that, to cancel the disengagement of the steering transmission (7), the position of a driving switch (reversing lever) and the steering wheel position are combined with one another by means of an AND operation.

6. Cross-drive steering transmission according to claims 1 and 3, characterized in that the selected transmission ratios (L5, L6, L7) in the steering transmission (7) are detected by pressure switches at the brake and clutch means (19, 20, 21, 22, 23 and 26) and checked for plausibility so that the pressure switch signals p_L5, p_L6 and p_L7 may not arise in random combinations.

7. Cross-drive steering transmission according to claims 1 and 3, characterized in that the protection device of the steering transmission (7) comprises three function blocks: an electronic transmission controller (31), a function block (32) of the steering transmission (7) and an arithmetic unit (33).

8. Cross-drive steering transmission according to claim 1, characterized in that disengagement of the steering transmission (7) is visually displayed for the driver.

## Revendications

1. Boîte de commande de direction de surcharge (7) pour un véhicule à chenilles ayant des jeux de roues planétaires (24, 25), des moyens de freinage et d'embrayage (19, 20, 21, 22, 23, 26) pour commander différentes démultiplications pour circuler sur des trajectoires curvilignes avec des rayons de courbure variables, **caractérisée en ce que** la vitesse d'entraînement en nombre de tours (n_An-Lenk), la vitesse entraînée en nombres de tours (n_Ab-Lenk) de la boîte de commande de direction (7) et les rapports de démultiplication enclenchés dans la boîte (7) sont mesurés et sont comparés à des paramètres prédéterminés (rapport de vitesse distincte de la position neutre, respectivement signal de rapport de vitesse, vitesse du véhicule, respectivement nombre de tours correspondant à la vitesse entraînée de la boîte de vitesses), et en ce que l'identification d'un patinage entraîne un désaccouplement de la boîte de commande de direction (7).

2. Boîte de commande de direction, selon la revendication 1, **caractérisée en ce que** l'alimentation en fluide sous pression de la boîte de direction (7) est interrompue en cas de détection d'un glissement.

3. Boîte de commande de direction, selon la revendication 1, **caractérisée en ce que** les paramètres de coupure sont déterminés par une liaison logique (Fonction-ET) des signaux d'entrée "vitesse enclenchée" (distincte de la position neutre N), de la vitesse du véhicule v_Fzg < à un seuil Fzg prédéterminé de la démultiplication commandée de la boîe de direction (p_Lenkgetr. L5, p_Lenkgetr. L6 et p_Lengetr. L7) ainsi que par la comparaison du nombre de tours à l'entrée et à la sortie (n_An-Lenk, n_Ab-Lenk) de la boîte de direction.

4. Boîte de commande de direction, selon la revendication 3, **caractérisée en ce que** les signaux d'entrée sont ajoutés au signal de freinage.

5. Boîte de commande de direction, selon les revendications 1 et 4, **caractérisée en ce que**, pour contrarier la déconnexion de la boîte de direction (7), la position d'un contacteur de route (levier de vitesses) et la position du volant de direction sont couplées par l'intermédiaire d'une fonction -ET.

6. Boîte de commande de direction, selon les revendications 1 et 3, **caractérisée en ce que** les démultiplications enclenchées (L5, L6, L7) de la boîte de direction (7) sont détectées par l'intermédiaire de contacteurs à poussoirs associés aux moyens de freinage et d'embrayage (19, 20, 21, 22, 23 et 26), et testées d'un point de vue plausibilité, de sorte que les signaux des contacteurs à poussoirs (p_L5, p_L6 et p_L7) ne puissent pas être combinés n'importe comment.

7. Boîte de commande de direction, selon les revendications 1 et 3, **caractérisée en ce que** la boîte de direction (7) est basée sur trois blocs de fonctions : une commande de vitesses électronique (31), un bloc de fonctions (32) de la boîte de direction (7) et une unité de calcul (33).

8. Boîte de commande de direction, selon la revendication 1, **caractérisée en ce que** le déclenchement de la boîte de détection (7) est indiquée visuellement au conducteur.
